# NEUE EUROPÄISCHE PATENTSCHRIFT

(11) **EP 1 592 882 B2**
(45) Veröffentlichungstag und Bekanntmachung des Hinweises auf die Entscheidung über den Einspruch: **23.10.2019**
(45) Hinweis auf die Patenterteilung: 02.05.2007
(21) Anmeldenummer: 03815540.4
(22) Anmeldetag: 07.11.2003
(51) Int. Cl.: F03D 1/00

(54) **VERFAHREN ZUR KRANLOSEN MONTAGE EINES ROTORBLATTES EINER WINDENERGIEANLAGE**
METHOD FOR MOUNTING A ROTOR BLADE OF A WIND ENERGY INSTALLATION WITHOUT USING A CRANE
PROCEDE PERMETTANT LE MONTAGE SANS GRUE D'UNE PALE DE ROTOR D'UNE EOLIENNE

(30) Priorität: 29.01.2003 DE 10303555
(43) Veröffentlichungstag der Anmeldung: 09.11.2005
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2003/012447
(87) Internationale Veröffentlichungsnummer: WO 2004/067954

(56) Entgegenhaltungen:
- EP-A- 1 101 936
- DE-A- 10 224 439
- DE-A1- 19 909 698
- DE-C- 19 726 408
- DE-C1- 19 726 408
- DE-U- 29 603 278

## Beschreibung

Es ist bereits seit langem bekannt, zur Montage von Rotorblättern an einer Windenergieanlage mobile Kräne einzusetzen. Solche Kräne nehmen das Rotorblatt am Fuß der Windenergieanlage auf und führen es an den Rotorblattanschluss der Nabe der Windenergieanlage heran, so dass das Rotorblatt mit der Nabe verbunden werden kann. Diese Verbindung erfolgt meistens durch Verschraubung, wobei in dem Verbindungsflansch des Rotorblatts Schraubbolzen eingelassen sind, die in entsprechende Bohrungen im Rotorblattanschluss der Nabe hineinragen, so dass Muttern auf die Schraubbolzen geschraubt werden können und damit das Rotorblatt an der Nabe befestigt wird.

Als veröffentlichter Stand der Technik sei insbesondere auf das Buch Hau, Erich: Windkraftanlagen, 1996 hingewiesen (siehe auch US-A-4 445 241). Es ist auch bekannt, statt eines mobilen Krans einen stationären Kran einzusetzen, welcher auf das Maschinenhaus der Windenergieanlage montiert ist. Dieser stationäre Kran ist mit einer Seilwinde und einem Windenantrieb versehen, so dass das Rotorblatt am Fuß der Windenergieanlage nach oben zum Rotorblattanschluss gezogen wird und dann damit verbunden werden kann.

Ein Nachteil von mobilen Kränen besteht darin, dass diese stets dann vor Ort sein müssen, wenn mit ihnen die Rotorblätter an der Nabe der Windenergieanlage montiert werden sollen. Da auch fast alle anderen Teile des Maschinenhauses mit diesen mobilen Kränen montiert werden, muss, damit die mobilen Kräne bestmöglich eingesetzt werden können, auch das Rotorblatt zeitgleich mit diesen Teilen auf der Baustelle sein, so dass mit einem einzigen Kraneinsatz alle wesentlichen Teile des Maschinenhauses der Windenergieanlage nebst aller Rotorteile montiert werden können. Ist es jedoch nicht möglich, die Rotorblätter zeitgerecht zur Baustelle zu liefern, so muss entweder der Kran auf das ankommende Rotorblatt warten oder alternativ dazu dann wieder erneut zur Baustelle gebracht werden, damit die Blattmontage erfolgen kann, wenn die Rotorblätter angeliefert werden.

Ein Nachteil von stationären Kränen besteht darin, dass auch diese regelmäßig nur mittels eines mobilen Krans auf dem Maschinenhaus der Windenergieanlage montiert werden können und darüber hinaus diese Kräne, wenn sie auf dem Maschinenhaus verbleiben, nur äußerst selten eingesetzt werden, so dass die Kosten für solche stationären Krananlagen kaum in einem vernünftigen Verhältnis zu ihrem Nutzen stehen.

Die Erfindung zielt darauf ab, die vorgenannten Nachteile zu vermeiden, insbesondere eine kostengünstige Alternative für die Blattmontage bereitzustellen.

Die Aufgabe wird mit einem Verfahren zur Blattmontage mit den Merkmalen nach Anspruch 1 gelöst. Vorteilhafte Weiterbildungen sind in den Unteransprüchen beschrieben.

Bei dem erfindungsgemäßen Verfahren kann auf einen Kraneinsatz zur Blattmontage verzichtet werden. Zumindest wird das Rotorblatt nicht mittels eines mobilen Krans an den Rotorblattanschluss der Nabe der Windenergieanlage herangeführt. Vielmehr schlägt die Erfindung vor, zwischen dem Nabenbereich des Maschinenhauses der Windenergieanlage und dem Bodenbereich am Fuße des Turms der Windenergieanlage wenigstens zwei Seile, parallel zum Turm aufzuspannen. Wenn diese Seile nunmehr Durchlaufwinden aufnehmen und diese Durchlaufwinden mit der Nabenanschlussseite des Rotorblatts verbunden werden, so können diese Durchlaufwinden das Rotorblatt an den gespannten Seilen zur Nabe der Windenergieanlage hochziehen. Ist die jeweilige Nabe mit dem zugeordneten Anschluss in 6-Uhr-Position verfahren, so kann das Rotorblatt mit seinem Nabenanschluss direkt an den Rotorblattanschluss der Nabe herangeführt werden, die Schraubbolzen können direkt in die dafür vorgesehenen Löcher der Nabe eingeführt und das Rotorblatt kann direkt mit der Nabe verbunden werden. Im Anschluss an die gesamte Rotorblattmontage können die Seile demontiert werden und auf einer weiteren Baustelle wiederum eingesetzt werden.

Der Vorteil des erfindungsgemäßen Verfahrens besteht darin, dass einerseits auf den mobilen Kraneinsatz zur Montage der Blätter ganz verzichtet werden kann, dass andererseits aber ein stationärer Kran nicht notwendig ist, um ein Rotorblatt an der Nabe zu montieren (demontieren). Außerdem sind die Werkzeuge, die zur Blattmontage gemäß des erfindungsgemäßen Verfahrens notwendig sind, auch bei weiteren Windenergieanlagen einsetzbar, was bei stationären Krananlagen regelmäßig nicht möglich ist.

Außerdem ist das Werkzeug, welches für die Erfindung benötigt wird, um das erfindungsgemäße Verfahren auszuführen, von einfachster Natur, wobei die Montage ausreichend sicher ist.

Werden zwei Seile vom Nabenbereich der Windenergieanlage zum Bodenbereich festgespannt und nimmt jedes Seil eine Durchlaufwinde auf, so kann der Antrieb der Winden sowohl synchron als auch einzeln (asynchron) erfolgen, um somit auf bestmögliche Weise das Rotorblatt passgenau an den Blattanschluss der Nabe heranzuführen. Zur Übereinanderlage der Schraubbolzen des Rotorblatts mit den entsprechenden Bohrungen des Rotorblattanschlusses ist es auch möglich, den Rotorblattanschluss selbst, wie im späteren Pitchbetrieb, zu verdrehen, so dass die richtigen Schraubbolzen in den dafür vorgesehenen Löchern liegen und fest mit der Nabe verbunden sind.

Wenn die Windenergieanlage drei Rotorblätter aufweist, so ist es vorteilhaft, wenn eines der Seile von einer (drehbaren) Welle oder einem Achszapfen der Windenergieanlage getragen wird, so dass bei Verdrehen der Nabe dieses Seil stets gespannt bleibt und nicht neu eingerichtet werden muss, um die Blattmontage für ein weiteres Rotorblatt vorzubereiten.

Lediglich das Seil, welches in dem vorderen Teil der Nabe, dem sogenannten Spinner, gehalten wird, muss beim Verdrehen der Nabe um 120° (bei einem Rotor mit drei Rotorblättern) so umgelegt werden, dass zur Blattmontage das Seil parallel zum Rotorblattanschluss der mit dem Blatt zu montierenden Nabe liegt und vertikal ausgerichtet ist. Eine solche Umrüstung ist jedoch relativ einfach und ohne sehr großen Aufwand möglich.

Die Erfindung ist nachfolgend anhand eines in einer Zeichnung dargestellten Ausführungsbeispiels beispielhaft erläutert.

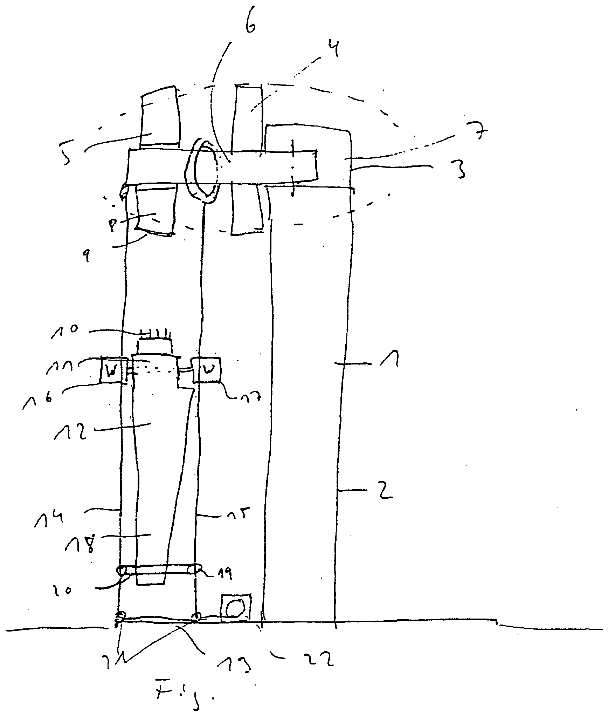

Die Figur zeigt in der Seitenansicht eine Windenergieanlage 1 mit einem Turm 2 und einem auf dem Turm angebrachten Maschinenhaus 3, welches einen Generator 4 und einen Rotor 5 mit einer Nabe 8 aufnimmt, wobei Generator und Rotor von einem Achszapfen 6, der auf einem Maschinenträger 7 des Maschinenhauses lagert, gehalten wird. Die Nabe 8 selbst weist einen drehbar gelagerten Rotorblattanschluss 9 auf, der einen Ringflansch mit einer Vielzahl von Bohrungen aufweist, durch welche später bei der Montage Schraubbolzen 10 am Verbindungsflansch 11 des Rotorblatts 12 steckbar sind, so dass durch Aufbringen von Muttern auf die Schraubbolzen das Rotorblatt an den Rotorblattanschluss der Nabe anschraubbar ist. Der Rotorblattanschluss ist ferner mit einem üblichen Pitchantrieb (nicht dargestellt) versehen, um somit den gesamten drehbaren Teil des Rotorblattes in einen gewünschten Anstellwinkel zu drehen.

Vom Nabenbereich 8 des Maschinenhauses 3 der Windenergieanlage 1 zum Bodenbereich 13 (Fundament) der Windenergieanlage sind zwei Seile 14, 15 im Wesentlichen parallel zueinander und parallel zum Turm 2 gespannt. Jedes der Seile nimmt eine Durchlaufwinde 16, 17 auf, welche ihrerseits mit dem nabenseitigen Anschluss 1 des Rotorblatts 12 lösbar verbunden sind.

Im nabenseitig abgewandten Bereich, also im Endbereich 18 des Rotorblatts 12 (Rotorblattspitze), weist das Seil eine Führungsvorrichtung 19 und Aufnahmeeinrichtung 20 auf, welche einerseits diesen Bereich des Rotorblatts aufnimmt und gleichzeitig das Rotorblatt 12 beim Hochziehen entlang der Seile so führt, dass dieses nicht in Berührung mit den Seilen kommt, und welche andererseits eine Auslenkung des Rotorblattes aus der gewünschten Hebe- oder Absenk-Richtung verhindert..

Jede Durchlaufwinde enthält einen Antrieb (nicht dargestellt), welcher bei Betrieb die Winde am Seil entlang nach oben bewegt, so dass das damit verbundene Rotorblatt 12 nach oben gezogen wird.

Der Antrieb der Durchlaufwinden ist steuerbar, gleichwohl kann aber auch ein synchroner Antrieb der Durchlaufwinden erfolgen, so dass diese parallel zueinander und stets in gleicher Höhe am Seil herauf oder herunter laufen.

Ein unabhängiger (asynchroner) Betrieb der Winden hat den Vorteil, dass auf diese Weise der Rotorblattanschluss um einen bestimmten Winkel geneigtwerden kann, falls dies notwendig ist, um die Schraubbolzen des Verbindungsflansch des Rotorblattes in den entsprechenden Rotorblattanschluss der Nabe einzuführen.

Die Befestigung der Seile am Boden kann über entsprechende beschwerte Platten (Fundament) erfolgen, in denen Ösen 21 angebracht sind, die das Seil aufnehmen, welches seinerseits mit einer weiteren Winde 22 festgezurrt ist. Die Befestigung eines Seils am Maschinenhaus kann ebenfalls auf ähnliche Weise erfolgen, es ist aber auch möglich, dass dasjenige Seil, welches vom Achszapfen getragen wird, von einem sogenannten Sling, einem Textilgurt, aufgenommen wird, welcher um den Achszapfen geschlungen ist. Ebenso kann das zweite Seil mit einem Sling, der um den gewünschten Rotorblattanschluss der Rotornabe geschlungen ist, befestigt sein. Allerdings befindet sich dieser Rotorblattanschluss im Bereich des Spinners, also der sich mit dem Rotor drehenden Nabenverkleidung, und muss daher von Rotorblatt zu Rotorblatt jeweils neu angebracht werden.

Wenn als Seil ein übliches Stahlseil, beispielsweise ein 14 mm Seil, eingesetzt wird, so ist damit bereits das Hochziehen eines Rotorblatts ohne Probleme möglich.

Nach der Blattmontage kann jedes Seil auf einfache Weise demontiert und an einer neuen Baustelle eingesetzt werden.

Das erfindungsgemäße Verfahren ist auch zur Demontage eines Blattes geeignet, was regelmäßig dann erfolgt, wenn das Blatt, aus welchen Gründen auch immer, von der Windenergieanlage abgenommen werden muss und/oder anschließend entweder repariert oder durch ein anderes ersetzt wird.

## Patentansprüche

1. Verfahren zur kranlosen Montage bzw. Demontage eines Rotorblatts (12) einer Windenergieanlage (1) an einem Rotorblattanschluss (9) an einer Nabe (8) eines Rotors (5) der Windenergieanlage (1), wobei zwischen einem Teil im Nabenbereich (8) der Windenergieanlage und dem Bodenbereich (13) der Windenergieanlage (1) wenigstens ein Seil (14, 15) eingespannt wird und das Rotorblatt (12) entlang des Seiles (14, 15) bei Montage nach oben oder bei Demontage nach unten bewegt wird. wobei wenigstens zwei Seile (14, 15) im Wesentlichen parallel zueinander zwischen dem Nabenbereich (8) der Windenergieanlage (1) und dem Bodenbereich (13) gespannt werden und das Rotorblatt (12) zwischen den beiden Seilen (14, 15) gelagert wird und an jedem Seil eine Einrichtung (16, 17) zum Hochziehen (Herunterlassen) des Rotorblatts (12) vorgesehen ist.,

2. Verfahren nach Anspruch 1,
**dadurch gekennzeichnet, dass** die Einrichtung zum Hochziehen (Herunterlassen) des Rotorblatts eine Durchlaufwinde ist, welche einerseits das Seil umschließt und andererseits mit dem Rotorblatt verbunden ist, wobei die Winde mit dem Verbindungsflansch des Rotorblatts verbunden ist.

3. Verfahren nach einem der vorgehenden Ansprüche,
**dadurch gekennzeichnet, dass** im Bereich der Spitze (18) des Rotorblatts (12) Führungsmittel (19, 20) ausgebildet sind, die das Rotorblatt am Seil entlang führen und dabei eine Berührung von Rotorblatt und Seil und eine unerwünschte Auslenkung des Rotorblatts verhindern.

4. Verfahren nach einem der vorgehenden Ansprüche,
**dadurch gekennzeichnet, dass** die Einrichtungen zum Hochziehen (Herunterlassen) des Rotorblatts an den Seilen individuell steuerbar als auch synchron steuerbar sind.

## Claims

1. Method for crane-free assembly or disassembly of a rotor blade (12) of a wind turbine (1) at a rotor blade connection (9) on a hub (8) of a rotor (5) of the wind turbine (1), wherein at least one cable (14, 15) is tensioned between a portion in the hub region (8) of the wind turbine and the base region (13) of the wind turbine (1) and the rotor blade (12) is moved along the cable (14, 15) during assembly in an upward direction or during disassembly in a downward direction,
wherein at least two cables (14, 15) are tensioned substantially parallel with each other between the hub region (8) of the wind turbine (1) and the base region (13) and the rotor blade (12) is supported between the two cables (14, 15) and a device (16, 17) for raising (lowering) the rotor blade (12) is provided on each cable.

2. Method according to claim 1,
**characterised in that** the device for raising (lowering) the rotor blade is an endless winch which, on the one hand, surrounds the cable and, on the other hand, is connected to the rotor blade, wherein the winch is connected to the connection flange of the rotor blade.

3. Method according to any one of the preceding claims,
**characterised in that** in the region of the tip (18) of the rotor blade (12) there are formed guiding means (19, 20) which guide the rotor blade along the cable and which in this instance prevent contact of the rotor blade and cable and undesirable deflection of the rotor blade.

4. Method according to any one of the preceding claims,
**characterised in that** the devices for raising (lowering) the rotor blade on the cables can be controlled individually and controlled synchronously.

## Revendications

1. Procédé servant au montage ou démontage sans grue d'une pale de rotor (12) d'une éolienne (1) au niveau d'un raccord de pale de rotor (9) au niveau d'un moyeu (8) d'un rotor (5) de l'éolienne (1), dans lequel au moins un câble (14, 15) est enserré entre une partie dans la zone de moyeu (8) de l'éolienne et la zone au sol (13) de l'éolienne (1) et la pale de rotor (12) est déplacée le long du câble (14, 15) vers le haut lors du montage ou vers le bas lors du démontage,
dans lequel au moins deux câbles (14, 15) sont mis sous tension sensiblement de manière parallèle les uns par rapport aux autres entre la zone de moyeu (8) de l'éolienne (1) et la zone au sol (13) et la pale de rotor (12) est montée entre les deux câbles (14, 15) et un système (16, 17) servant à remonter (abaisser) la pale de rotor (12) est prévu au niveau de chaque câble.

2. Procédé selon la revendication 1,
**caractérisé en ce que** le système servant à remonter (abaisser) la pale de rotor est un treuil continu, lequel entoure d'une part le câble et est relié d'autre part à la pale de rotor, dans lequel le treuil est relié au flasque de liaison de la pale de rotor.

3. Procédé selon l'une quelconque des revendications précédentes,
**caractérisé en ce que** sont réalisés, dans la zone de la pointe (18) de la pale de rotor (12), des moyens de guidage (19, 20) qui guident la pale de rotor le long du câble et empêchent ce faisant tout contact entre la pale de rotor et le câble et une déviation non souhaitée de la pale de rotor.

4. Procédé selon l'une quelconque des revendications précédentes,
**caractérisé en ce que** les systèmes servant à remonter (abaisser) la pale de rotor au niveau des câbles peuvent être commandés individuellement ou peuvent être commandés également de manière synchrone.
